# EUROPEAN PATENT APPLICATION

(11) **EP 1 163 984 A1**
(43) Date of publication of application: **19.12.2001**
(21) Application number: 01305074.5
(22) Date of filing: 11.06.2001
(51) Int. Cl.: B25J 9/10, F16H 1/32

(54) **Joint structure for a robot comprising a speed reducer**

(30) Priority: 12.06.2000 JP 2000174696
(71) Applicant: FANUC LTD, Minamitsuru-gun, Yamanashi 401-0597 (JP)
(72) Inventor: Okada, Takeshi, Room 10-306, FANUC Manshonharimoni, Minamitsuru-gun, Yamanashi, 401-0511 (JP); Ebihara, Yasuhiro, Room 14-508,FANUC Manshonharimo, Minamitsuru-gun, Yamanashi, 401-0511 (JP)
(74) Representative: Silverman, Warren

(57) **Abstract**

A first member (11) of a robot is fixed to a casing (18) of a speed reducer. A second member (12) is fixed by fitting to a rotating member (21) that rotates relatively to the casing (18). A motor (13) is mounted on the second member (12), and an input gear (14) that is connected directly to the shaft of the motor (13) and a spur gear (15) of the speed reducer are made to mesh with each other. A crankshaft (16) that is connected to the spur gear (15) is rotatably mounted on the rotating member (21) through a bearing. As the spur gear (15) and the crankshaft (16) rotate, an external gear (17) rocks eccentrically and rotates for on tooth with respect to an internal gear (19) in the casing (18). Thereupon, the rotating member (21) rotates relatively to the casing (18), while the second member (12) rotates relatively to the first member (11). The speed reducer of the invention, compared with a conventional one, requires no use of a center gear, so that it includes fewer components, and therefore, is lower-priced and more reliable.

## Description

The present invention relates to a joint structure for transmitting power to a joint portion between movable robot members such as a turning trunk, arms, etc. of a robot.

In an industrial robot' speed reducers of various types are used for joint portions between members that move relatively to each other, e.g., between a robot base and a trunk portion turning with respect to the robot base, between the trunk portion and a first arm rocking on the trunk portion, between the first arm and a second arm rocking on the first arm, etc.

Typical of these speed reducers is a hollow-type speed reducer used in order to secure the installation position of a motor for driving each arm or wrist of the robot and having a passage for cables and hoses through which energy such as electric power, hydraulic pressure, or pneumatic pressure is supplied to an end effecter that is attached to the distal end of the robot wrist. Since a through hole for the cable or hose passage is provide in the canter of rotation of the speed reducer, moreover, the motor is located off the axis of the speed reducer, in general.

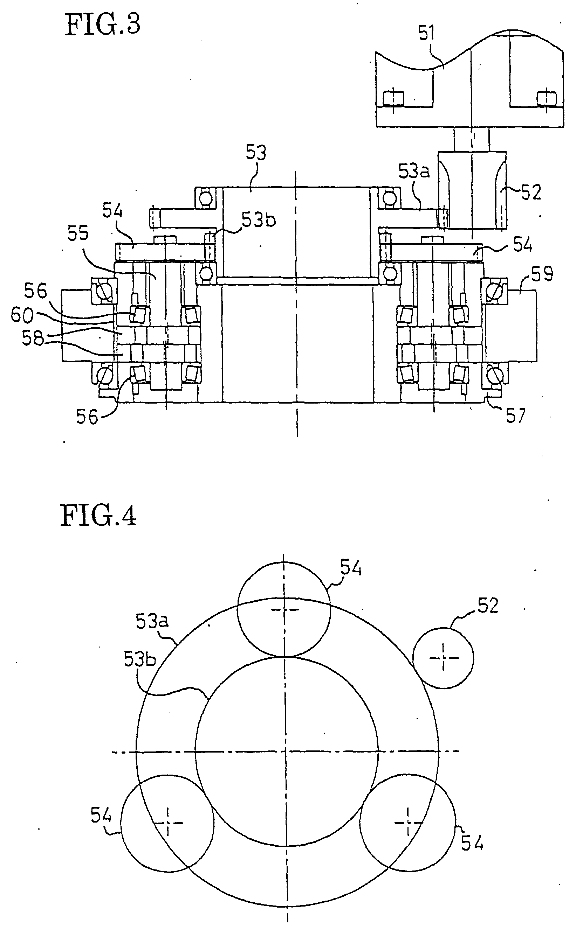

FIG. 3 is a sectional view of a planetary-gear speed reducer of the eccentric rocking type that is generally used in each joint portion of the robot. FIG. 4 is a diagram for illustrating the engagement of gears of the planetary-gear speed reducer.

A center gear 53 includes a gear wheel 53a and a pinion 53b. An input gear 52 that is connected directly to an output shaft of a motor 51 is in mesh with the gear wheel 53a of the center gear 53. As shown in FIG. 4, moreover, three spur gears 54 that are arranged at equal spaces in the circumferential direction are in mesh with the pinion 53b of the canter gear 53.

The spur gears 54 are fixed to a crankshaft 55. The crankshaft 55 is rotatably mounted on a rotating member 57 through a bearing 56. An external gear 58, which is rockably mounted on an eccentric portion of the crankshaft 55 through a bearing, meshes with an internal gear 60 inside a casing 59. The rotating member 57 is attached to the casing 59 for relative rotation through a bearing.

When the motor 51 is driven to rotate the input gear 52, the gear wheel 53a that is in mesh with the gear 52 is driven so that the is center gear 53 rotates, whereupon the rotational speed is reduced in accordance with the gear ratio. The input gear 52 and the gear wheel 53a of the canter gear 53 constitute a first speed reducing unit.

When the center gear 53 rotates, the three spur gears 54 that are in mesh with the pinion 53b of the gear 53 rotate. The spur gears 54 constitute an input portion of a second speed reducing unit. When the three spur gears 54 rotate, the crankshaft 55 that is connected to the spur gears 54 moves eccentrically, so that the external gear 58 makes an eccentric motion. The number of teeth of the internal gear 60 which are formed inside the casing 59 and are in mesh with the external gear 58 is greater than that of the gear 58 by one. When the crankshaft 55 makes one revolution, therefore, the external gear 58 rotates for one tooth in the direction opposite to the rotating direction of the crankshaft 55. If the casing 59 is fixed, the rotating member 57 is made to rotate correspondingly for one tooth through the crankshaft 55. A portion that causes the rotating member 57 finally to rotate at reduced speed as the spur gears 54 rotate constitutes a second speed reducing unit.

The speed reducer has a through hole in its central portion. More specifically, a through hole is formed penetrating the respective central portions of the rotating member 57 and the center gear 53, and this through hole serves as a passage for wiring and/or piping. Accordingly, the motor that is connected to the speed reducer is mounted in a position eccentric to the central through hole portion.

As described above, the joint structure of the industrial robot that uses the planetary-gear speed reducer of the eccentric rocking type requires use of the center gear 53 between the input gear 52, which is connected directly to the motor 51, and the spur gears 54 of is the speed reducer. The center gear 53 has a double-gear structure including the gear wheel 53a that is in mesh with the input gear 52 and the pinion 53b that is in mesh with the spur gears 54. Inevitably, therefore, the center gear 53 has a complicated construction, which entails high manufacturing cost. Further, supporting the canter gear 53 requires two bearings. The use of the canter gear and the two bearings results in increase in cost of the hollow speed reducer, and constitutes a hindrance to the reduction of the manufacturing cost of the robot joint structure.

An object of the present invention is to provide a joint structure of a robot, in which the number of components is reduced without lowering the reliability of a joint drive system.

The present invention provides, in one aspect a joint structure to be between a first member and a second member of a robot that are connected to each other for relative rotation by means of a speed reducer. The first and second members include a base, arms, turning trunk, etc. of a robot. The speed reducer is composed of a first-stage speed reducing mechanism and a second-stage speed reducing mechanism.

The first-stage speed reducing mechanism includes an input gear connected directly to the output shaft of a motor and a single spur gear in mesh with the input gear. The second-stage speed reducing mechanism includes a crankshaft connected directly to the spur gear, an external gear which engages the crankshaft to be rocked eccentrically, a casing of the speed reducer, an internal gear which is formed inside the casing and is in mesh with the external gear, and a rotating member which supports the crankshaft for rotation and can rotate around the central axis of the internal gear with respect to the casing.

A joint is constructed in a manner such that the casing is fitted with the first member, the rotating member is fitted with the second member, and the motor is attached to the second member so that the to input gear is in mesh with the spur gear.

Further, the second member may be provided with a mounting portion for mounting the motor in a given position and is attached to the rotating member by fitting in order to align the axis of the second member with the axis of the output of the speed reducer. A positioning pin is used for settling a rotational phase of the second member with respect to the rotating member when attaching the second member to the rotating member, thereby securing the engagement between the input gear and the spur gear. Furthermore, the first and second members of the robot may have a hollow structure inside, and the casing and the rotating member are provided with through holes around their axes such that a space for wiring and/or piping is secured inside the joint.

The joint structure according to the present invention, compared with a joint structure that uses a conventional speed reducer, requires no canter gear, so that bearings for supporting the center gear can be omitted, that is, the number of essential components can be reduced. Since such canter gear has a complicated shape, in particular, its manufacturing cost is high. Thus, the omission of the center gear and the bearings that support it results in a corresponding reduction in cost of a drive system for robot joint portions. Since the number of essential components is reduced, moreover, the reliability and operating efficiency of the joint drive system can be improved. Since no canter gear is used, furthermore, the number of spots for gear engagement is reduced, so that the noise level can be lowered.

In a second aspect, this invention provides a joint structure for a robot, comprising:
a speed reducer including a cylindrical casing, a rotating member rotatably supported on the casing through a first bearing and having a hollow in the center thereof, and a gear speed reducing mechanism arranged on the casing for rotation through a second bearing and having a hollow in the center thereof;
a first member fixed to the casing of the speed reducer and having a hollow in the center thereof;
a second member fixed to the rotating member of the speed reducer and hollow in the center thereof; and
a motor fixed to the second member so that the output shaft thereof extends in the direction parallel to the central axis of the speed reducer toward the gear speed reducing mechanism of the speed reducer,
wherein a robot joint is constituted between the first member and the second member in a manner such that the gear speed reducing mechanism of the speed reducer is actuated by the rotation of the output shaft of the motor to make the second member rock with respect to the first member.

For a better understanding of the invention, and to show how the same may be carried into effect, reference will now be made, by way of example, to the accompanying drawings, in which:-
FIG. 1 is a sectional view showing a joint structure of a robot according to a first embodiment of the present invention;
FIG. 2 is a sectional view showing a joint structure of a robot according to a second embodiment of the invention;
FIG. 3 is a sectional view of a conventional planetary-gear speed reducer of the eccentric rocking type used in a joint mechanism of a robot; and
FIG. 4 is a diagram for illustrating the engagement of gears of the planetary-gear speed reducer of FIG. 3.

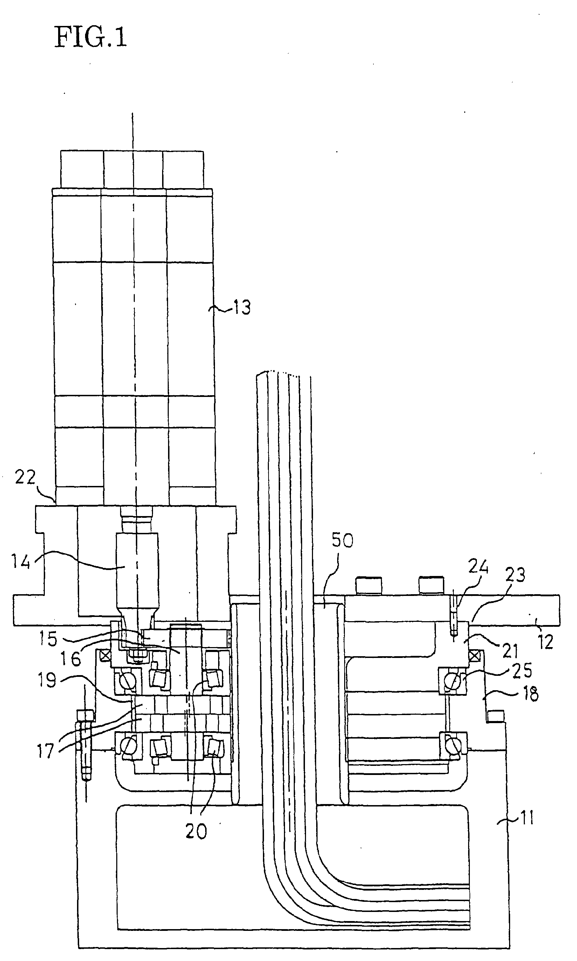

An embodiment of a robot joint structure according to a first aspect of the present invention will now be described with reference to FIG.1.

This robot joint structure includes a first member 11 and a second member 12, which are connected to each other for relative rotation by means of a speed reducer. The first and second members 11 and 12 include a base, arms, turning trunk, etc. of a robot. A conventional hollow planetary-gear speed reducer (but having no center gear) of the eccentric rocking type is used as the speed reducer.

A casing 18 of the speed reducer is fixed to the first member 11. On the other hand, a rotating member 21 of the speed reducer is fixed to the second member 12. A motor 13 is fastened to a mounting portion 22 that is located in a given position on the second member 12, and causes the speed reducer to rock the second member 12 relatively to the first member 11.

A mounting portion 23 (in the form of a circumferential groove) is formed in the second member 12, whereby the rotating member 21 of the speed reducer is fixed to the second member 12. An end portion of the rotating member 21 is fitted in the mounting portion 23. As this is done, the central axis of the second member 12 is in alignment with the axis of the rotating member 21 (or the axis of the output shaft of the speed reducer).

In order to settle the rotational phase of the second member 12 with respect to the rotating member 21, moreover, the rotating member 21 is fixed to the second member 12 by means of a positioning pin 24. Thus, a given distance is secured between the central axis of an input gear 14 (mentioned later) and the central axis of a spur gear 15 of the speed reducer, so that the input gear 14 and the spur gear 15 can mesh with each other.

Further, the rotating member 21 is rotatably supported on the casing 18 of the speed reducer through a bearing 25.

The input gear 14 is connected directly to the output shaft of the motor 13. The input gear 14, which can mesh with the spur gear 15 of the speed reducer, as mentioned before, constitutes a first-stage speed reducing mechanism of the speed reducer.

The present invention is characterised in that the input gear 14 of the motor 13 is directly in mesh with the spur gear 15 of the speed reducer. In this arrangement, the power of the motor 13 is transmitted directly to the spur gear 15.

In the conventional planetary-gear speed reducer of the eccentric rocking type shown in FIG. 3, on the other hand, the input gear 52 meshes with the gear wheel 53a of the canter gear 53, while the pinion 53b of the center gear 53 meshes with the spur gears 54. In this arrangement, the power of the motor is transmitted from the input gear 52 to the spur gears 54 via the center gear 53. Although the spur gears 54 shown in FIG. 3 are three in number, the spur gear 15 used in the present invention is one.

Returning to FIG. 1, there is shown a crankshaft 16 that is fixed to the spur gear 15. The crankshaft 16 is rotatably mounted on the rotating member 21 through a bearing 20. As in the case of the conventional planetary-gear speed reducer of the eccentric rocking type, an external gear 17 is rockably mounted on an eccentric portion of the crankshaft 16 through a bearing. The external gear 17 rocks eccentrically as the crankshaft 16 rotates. This arrangement is shared by the conventional planetary-gear speed reducer.

An internal gear 19 that meshes with the external gear 17 is provided on the inner peripheral surface of the casing 18 of the speed reducer. The number of teeth of the internal gear 19 is greater than that of the external gear 17 by one. When the crankshaft 16 makes one revolution, therefore, the external gear 17 rotates for one tooth with respect to the internal gear 19 in the direction opposite to the rotating direction of the crankshaft 16. Corresponding to the rotation of the external gear 17, the rotating member 21 rotate with respect to the casing 18 through the crankshaft 16.

Thus, the second member 12 that is fixed to the rotating member 21 rotates relatively to the first member 11 to which the casing 18 is fixed. The crankshaft 16, external gear 17 and internal gear 19 constitute a second-stage speed reducing mechanism of the speed reducer.

The first and second members 11 and 12 that constitute the robot joint structure have a hollow structure. The speed reducer of this joint structure has a through hole 50 in its central portion. The motor 13 is attached eccentrically to the second member 12. Thus, the through hole 50 in the central portion of the speed reducer serves as a passage for cables and hoses for wiring and piping.

If the motor 13 is driven to rotate the input gear 14, the rotary power of the motor 13 is transmitted, with the rotary speed reduced, to the crankshaft 16 through the input gear 14 and the spur gear 15 that constitute the first-stage speed reducing mechanism. As the crankshaft 16 rotates, the external gear 17 rocks eccentrically and rotates for one tooth with respect to the internal gear 19 of the casing 18 which is in mesh with the external gear 17, whereupon the rotating member 21 rotates with respect to the casing 18. In consequence, the second member 12 that is fixed to the rotating member 21 rotates relatively to the first member 11 to which casing 18 is fixed.

The motor 13 that is fixed to the second member 12 also rotates together with the second member 12 and the rotating member 21 that rotates integrally with the second member. Since the spur gear 15 that is mounted on the rotating member 21 through the crank shaft 16 also rotates together with the rotating member 21, on the other hand, the input gear 14 that is connected directly to the output shaft of the motor 13 cannot be disengaged from the spur gear 15 if the second member 12 rotates relatively to the first member 11.

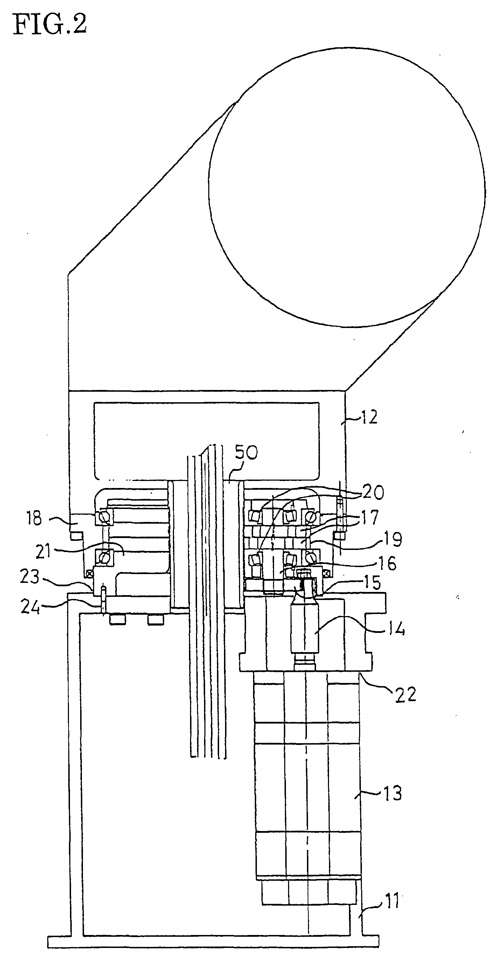

A robot joint structure according to another embodiment of the invention will now be described with reference to FIG. 2.

According to the above-described embodiment, the casing of the speed reducer is fixed to the first member that constitutes the base, and the rotating member of the speed reducer is fixed to the second member, so that the second member is rotated relatively to the first member (or the base). The motor is mounted on the second member. According to the second embodiment, on the other hand, a rotating member of a speed reducer is fixed to a first member that constitutes a base, and a casing of the speed reducer is fixed to a second member, so that the second member is rotated relatively to the first member (or base). In this case, a motor is mounted on the first member.

The first and second embodiments are based on common technical designs in which one of the rotating member and the casing that constitute the speed reducer is provided on the first member (or the base) while the other is provided on the second member, thereby allowing the second member to be rotated with respect to the first member through the speed reducer, and the motor is mounted on the first or second member to which the rotating member of the speed reducer is attached.

The following is a brief description of this second embodiment As shown in FIG. 2, a first member 11 that constitutes a base is provided with a motor mounting portion 22 for a motor 13. Further, the first member 11 is formed with a mounting portion 23 (in the form of a circumferential groove) for fixing a rotating member 21 of the speed reducer. An end portion of the rotating member 21 of the speed reducer is fitted into the mounting portion 23, and the rotational phase of the first member 11 with respect to the rotating member 21 is settled by means of a positioning pin 24.

When the rotating member 21 of the speed reducer is attached to the first member 11 in this manner, the distance between the respective axes of an input gear 14 that is connected directly to the output shaft of the motor 13 and a spur gear 15 of the speed reducer is settled, and the input gear 14 and the spur gear 15 are positioned so that they can mesh with each other.

Further, a second member 12 that rotates relatively to the first member 11 serving as the base is fixed to a casing 18 of the speed reducer.

The second embodiment shares other configurations with the first embodiment. More specifically, the spur gear 15 is fitted with a crankshaft 16, which is rotatably mounted on the rotating member 21 through a bearing 20. An external gear 17 is rockably mounted on an eccentric portion of the crankshaft 16 through a bearing, and meshes with an internal gear 19 that is provided inside the casing 18.

When the motor 13 is driven, the rotation of the input gear 14 is transmitted, with the rotational speed reduced, to the crankshaft 16 through the spur gear 15. When the crankshaft 16 makes one revolution, the external gear 17 rocks eccentrically and rotates for one tooth with respect to the internal gear 19. Corresponding to the rotation of the external gear 17, the rotating member 21 rotates with respect to the casing 18. In consequence, the second member 12 that is attached to the casing 18 rotates relatively to the first member 11, since the rotating member 21 is fixed to the first member 11.

According to the present invention, as described above, the input gear that is connected directly to the output shaft of the motor is caused directly to mesh with the spur gear of the speed reducer, so that the center gear, which is essential to the conventional speed reducer, can be omitted.

To attain this, a motor is mounted on a robot member attached to the rotating member of the speed reducer on which a spur gear is mounted so that the motor rotationally moves integrally with the rotating member to maintain its relative position to the rotating member, thus preventing the spur gear from disengaging from the input gear. Besides, as the rotating member is connected to the robot member on which the motor is mounted by fitting and the rotational phase is settled through the positioning pin or the like, the distance between the respective axes of the spur gear and the input gear is settled to ensure the engagement of the spur gear with the input gear.

## Claims

1. A joint structure for a robot, comprising:
a first member and a second member connected to each other for relative rotation through a speed reducer; and
a motor for driving the second member for rotation relative to the first member, wherein
the speed reducer includes a first-stage speed reducing mechanism and a second-stage speed reducing mechanism,
the first-stage speed reducing mechanism includes an input gear connected directly to the shaft of the motor and a single spur gear in mesh with the input gear,
the second-stage speed reducing mechanism includes a crankshaft connected directly to the spur gear, an external gear which engages the crankshaft to be rocked eccentrically, a casing of the speed reducer, an internal gear which is formed inside the casing and is in mesh with the external gear, and a rotating member which supports the crankshaft for rotation and can rotate around the central axis of the internal gear with respect to the casing,
the casing of the second-stage speed reducing mechanism is attached to the first member,
the second member is attached to the rotating member of the second-stage speed reducing mechanism, and
the motor is attached to the second member so that the input gear of the motor is in mesh with the spur gear of the first-stage speed reducing mechanism.

2. The joint structure for a robot according to claim 1, wherein said second member is provided with a mounting portion for mounting the motor in a given position and is attached to the rotating member by a fitting in order to align the axis of the second member with the axis of the output of the speed reducer, and said second member and said rotating member are configured such that the rotational phase of the second member with respect to the rotating member is settled using a positioning pin when attaching the second member to the rotating member.

3. The joint structure for a robot according to claim 1 or claim 2, wherein said first and second members of the robot have a hollow structure inside, and said casing and said rotating member are provided with through holes around their common axis so that wiring and/or piping is secured inside the joint.

4. A joint structure for a robot, comprising:.
a speed reducer including a cylindrical casing, a rotating member rotatably supported on the casing through a first bearing and having a hollow in the center thereof, and a gear speed reducing mechanism arranged on the casing for rotation through a second bearing and having a hollow in the center thereof;
a first member fixed to the casing of the speed reducer and having a hollow in the center thereof;
a second member fixed to the rotating member of the speed reducer and hollow in the center thereof; and
a motor fixed to the second member so that the output shaft thereof extends in the direction parallel to the central axis of the speed reducer toward the gear speed reducing mechanism of the speed reducer,
wherein a robot joint is constituted between the first member and the second member in a manner such that the gear speed reducing mechanism of the speed reducer is actuated by the rotation of the output shaft of the motor to make the second member rock with respect to the first member.
